# EUROPÄISCHE PATENTSCHRIFT

(11) **EP 4 177 409 B1**
(45) Veröffentlichungstag und Bekanntmachung des Hinweises auf die Patenterteilung: **20.08.2025**
(21) Anmeldenummer: 21206548.6
(22) Anmeldetag: 04.11.2021
(51) Int. Cl.: E03C 1/05, H04L 12/40

(54) **SANITÄRSYSTEM**
SANITARY SYSTEM
SYSTÈME SANITAIRE

(43) Veröffentlichungstag der Anmeldung: 10.05.2023
(73) Patentinhaber: Geberit International AG, 8645 Jona (CH)
(72) Erfinder: RAISSLE, Daniel, 8852 Altendorf (CH); OBERHOLZER, Roland, 8610 Uster (CH); PORTMANN, Florian, 8708 Männedorf (CH); HARTMANN, Andy, 8712 Stäfa (CH); SALZMANN, Stefan, 8640 Rapperswil (CH)
(74) Vertreter: Frischknecht, Harry Ralph

(56) Entgegenhaltungen:
- EP-A1- 3 375 939
- DE-A1- 102008 050 714
- SCHELL GMBH & CO. KG: "eSCHELL Wassermanagement-System Systemanleitung", INTERNET, 1 January 2018 (2018-01-01), XP055908027, Retrieved from the Internet <URL:https://www.schell.eu/uploads/tx_dbdownloads/903053800_A.pdf> [retrieved on 20220401]
- PINTILIE LUCIAN NICOLAE ET AL: "An I2C and Ethernet based open-source solution for home automation in the IoT context", 2019 54TH INTERNATIONAL UNIVERSITIES POWER ENGINEERING CONFERENCE (UPEC), IEEE, 3 September 2019 (2019-09-03), pages 1 - 4, XP033648836, DOI: 10.1109/UPEC.2019.8893583
- ALBRECHT JUNG GMBH & CO. KG: "Artikeldatenblatt Spannungsversorgung mit IP-Schnittstelle 20320 1S IPS R", INTERNET, 6 November 2020 (2020-11-06), XP055927606, Retrieved from the Internet <URL:https://descargas.futurasmus-knxgroup.org/doc/de/jung/34642/de_203201sipsr_ad.pdf> [retrieved on 20220602]
- LINGG & JANKE: "Intelligente Gebäudeautomation schnell. einfach. smart.", INTERNET, 1 March 2016 (2016-03-01), XP055927608, Retrieved from the Internet <URL:https://www.knx-quick.de/de/assets/files/PI_DE/LuJ_Prospekt_quick_DE_web_03-03-2016.pdf> [retrieved on 20220602]
- GIRA GIERSIEPEN GMBH & CO. KG: "DALI-Gateway Plus", INTERNET, 15 June 2020 (2020-06-15), XP055927790, Retrieved from the Internet <URL:https://partner.gira.de/data3/21801310.pdf> [retrieved on 20220603]

## Beschreibung

### TECHNISCHES GEBIET

Die vorliegende Erfindung betrifft ein Sanitärsystem nach Anspruch 1.

### STAND DER TECHNIK

Aus dem Stand der Technik sind vernetzte Sanitärsysteme bekannt. Beispielsweise offenbart DE 93 13 983 U1 eine Ansteuerung von diversen Sanitärelementen mit einer zentralen Steuerung. WO 2009/061857 zeigt die Anbindung einer Sanitärinfrastruktur an das Internet. Schell GmbH & Co. KG: "eSCHELL Wassermanagement-System Systemanleitung" und EP 3 375 939 A1 offenbaren ein vernetztes Sanitärsystem. Pintilie Lucian Nicolae ET AL.: "An I2C and Ethernet based open-source solution for home automation in the loT context" offenbart die Nutzung von I2C zwischen einer Steuerungseinheit und Sensoren bzw. Aktoren.

### DARSTELLUNG DER ERFINDUNG

Eine Aufgabe der vorliegenden Erfindung ist es, ein vernetztes Sanitärsystem anzugeben, welches unter der Massgabe einer stabilen Vernetzung der Einzelkomponenten in einem Sanitärsystem einfach zu installieren ist.

Diese Aufgabe löst das Sanitärsystem nach Anspruch 1.

Ein Vorteil des Sanitärsystems ist es, dass mit dem ersten und dem zweiten Kabel eine Daten- und Energieleistung zwischen dem Gateway und der mindestens einen Sanitärartikelsteuerung bereitgestellt werden kann. Somit muss nur ein einziges Kabel verlegt werden, was den Bau eines derartigen Sanitärsystems stark vereinfacht und auch vergünstigt. Zudem kann über die drahtgebundene Datenleitung mit der Datenbusleiteranordnung eine stabile Anbindung der Sanitärartikelsteuerungen an das Gateway erreicht werden.

Vorzugsweise sind die Konverterfunktionen den benötigen Funktionen der Sanitärartikelsteuerungen angepasst.

Vorzugsweise werden die Datenbusleiteranordnung und die Speisungsleiteranordnung parallel im jeweiligen Kabel geführt.

Vorzugsweise ist pro Sanitärartikel je ein Konverter angeordnet.

Vorzugsweise stellt das Gateway an der ersten gatewayseitigen Schnittstelle eine Spannung im Bereich von 18 bis 48 Volt bereit. Der Spannungskonverter wandelt die Spannung von 18 bis 48 Volt in eine tiefere Spannung von 2.5 Volt bis 15 Volt um, so dass an der zweiten konverterseitigen Schnittstelle eine umgewandelte Spannung bereitstellbar ist.

Besonders bevorzugt liegt die Spannung an der ersten gatewayseitigen Schnittstelle bei 24 Volt und die umgewandelte Spannung ist 4.5 Volt oder 12 Volt.

Erfindungsgemäß ist die Datenbusleiteranordnung zwischen dem Gateway und dem Konverter ein RS-485-Bus, der mit einem RS-485-Protkoll betrieben wird, und die Datenbusleiteranordnung zwischen dem Konverter und der Sanitärartikelsteuerung ein I²C-Bus, der mit einem I²C-Protokoll betrieben wird. Der Datenkonverter ist zur Umwandlung der Daten zwischen dem RS-485-Bus-Prokoll und dem I²C-Bus-Protokoll konfiguriert bzw. programmiert.

Mit dem RS-485-Bus können die Daten sehr einfach über grosse Strecken übertragen werden, während der I²C-Bus den Vorteil aufweist, dass eine technisch einfache Verbindung mit der Steuerung bereitgestellt werden kann. Ein weiterer Vorteil ist, dass gängige Steuerungselemente eingesetzt werden können, welche vergleichsweise kostengünstig realisierbar sind. Dies insbesondere dadurch, weil das I²C-Protokoll in sehr vielen Microcontroller eingesetzt wird.

Vorzugsweise umfasst der Datenkonverter ein entsprechendes Computerprogramm, welches dazu ausgebildet ist, die Umwandlung der Daten zwischen dem RS-485-Bus-Prokoll und dem I²C-Bus-Protokoll auszuführen.

Vorzugsweise weist das Gateway weiter eine Energieversorgungsschnittstelle auf, über welche das Gateway mit Netzspannung von 230 Volt versorgt wird, wobei das Gateway einen Spannungskonverter aufweist, welcher die Netzspannung von 230 Volt in eine tiefere Spannung umwandelt, welche tiefere Spannung an der ersten gatewayseitigen Schnittstelle dem ersten Kabel bereitgestellt wird.

Vorzugsweise ist die tiefere Spannung im Bereich von 18 bis 48 Volt, insbesondere bei 24 Volt.

Vorzugsweise weist das Gateway mindestens eine Datenschnittstelle auf, über welche das Gateway an ein gemäss einem IP-Protokoll betriebenen Netzwerk anschliessbar ist, und dass das Gateway einen Datenkonverter aufweist, der zur Umwandlung der Daten zwischen dem IP-Protokoll und dem Protokoll der Datenbusleiteranordnung des ersten Kabels konfiguriert ist. Vorzugsweise umfasst der Datenkonverter ein entsprechendes Computerprogramm, welches dazu ausgebildet ist, die Umwandlung der Daten zwischen dem IP-Protokoll und dem Protokoll der Datenbusleiteranordnung des ersten Kabels auszuführen.

Gemäss einer bevorzugten Ausbildung wird die Datenbusleiteranordnung mit einem RS-485-Protokoll betrieben. Dabei ist der Datenkonverter im Gateway zur Umwandlung der Daten zwischen dem IP-Protokoll und dem RS-485-Protokoll konfiguriert.

In einer Weiterbildung weist der Konverter eine Energieversorgungsschnittstelle auf, über welche der Konverter mit Netzspannung von 230 Volt versorgt wird, wobei der Spannungskonverter die Spannung von 230 Volt in eine tiefere Spannung im Bereich von 4 Volt bis 24 Volt umwandelt. Vorzugsweise ist die tiefere Spannung bei 12 Volt. Diese separate Energieversorgung hat den Vorteil, dass auch Elemente am Sanitärartikel gesteuert werden können, die eine höhere Leistung benötigen.

Vorzugsweise umfasst das System einen weiteren Konverter, wobei der weitere Konverter eine erste konverterseitige Schnittstelle und eine zweite konverterseitige Schnittstelle aufweist, und eine Energieversorgungsschnittstelle aufweist, wobei die erste konverterseitige Schnittstelle mit dem ersten Kabel in Verbindung steht, und wobei über die Energieversorgungsschnittstelle der Konverter mit Netzspannung von 230 Volt versorgt wird, wobei der Spannungskonverter die Spannung von 230 Volt in eine tiefere Spannung im Bereich von 4 Volt bis 24 Volt umwandelt. Vorzugsweise ist die tiefere Spannung bei 12 Volt. Bei dieser Variante ist die Speisungsleiteranordnung im ersten Kabel zwar vorhanden, wird aber nicht benötigt bzw. nicht angeschlossen.

Vorzugsweise ist der Konverter zwischen der ersten konverterseitigen Schnittstelle und der zweiten konverterseitigen Schnittstelle galvanisch getrennt ausgebildet.

Vorzusgweise umfassen die gatewayseitige Schnittstelle und/oder die erste konverterseitige Schnittstelle und/oder die zweite konverterseitige Schnittstelle und/oder die sanitärartikelseitige Schnittstelle Steckverbinderelemente, wie Stecker und Buchsen, oder Anschlussklemmen umfassen.

Vorzugsweise stehen mehrere Konverter mit dem ersten Kabel sternförmig mit dem Gateway in Verbindung oder mehrere Konverter stehen mit dem ersten Kabel in Serie mit dem Gateway in Verbindung.

Vorzugsweise weist das Gateway mindestens eine drahtlose Datenschnittstelle auf, wobei die Sanitärartikelsteuerung eine drahtlose Datenschnittstelle aufweist, wobei die Datenschnittstellen derart ausgebildet, dass Daten über die Datenschnittstellenzwischen dem Gateway und der Sanitärartikelsteuerung austauschbar sind.

Vorzugsweise umfasst das Sanitärsystem weiterhin mindestens einen Computer mit mindestens einen Prozessor, mindestens eine mit dem Prozessor wirkverbundene computerseitige Kommunikationsschnittstelle und einen mit dem Prozessor wirkverbundenen Bildschirm, wobei der Computer mit der computerseitigen Kommunikationsschnittstelle mit einer entsprechenden Datenschnittstelle mit dem Gateway verbindbar ist, derart, dass eine Datenverbindung zwischen Computer und dem Gateway bereitstellbar ist.

Der Computer kann direkt mit dem Gateway verbunden werden. Eine indirekte Verbindung über das oben genannte IP-Netzwerk wäre auch denkbar.

Vorzugsweise umfasst das Gateway eine drahtgebundene oder drahtlose Datenschnittstelle, welche mit einer entsprechenden Datenschnittstelle einer weiteren Sanitärartikelsteuerung verbindbar ist, derart, dass Daten über die Datenschnittstellen zwischen dem Gateway und der Sanitärartikelsteuerung austauschbar sind.

Vorzugsweise weist die Sanitärartikelsteuerung mindestens einen Prozessor auf, der mit der Schnittstelle wirkverbunden ist. Vorzugsweise weist auch das "Gateway" einen Prozessor auf, welcher dazu eingerichtet ist, die Daten zu verarbeiten.

Unter der Ausdrucksweise "Sanitärartikel" werden sämtliche in einem Sanitärraum zu platzierende Elemente verstanden. Insbesondere wird unter der Ausdrucksweise "Sanitärartikel" ein Urinal, eine Toilettenschüssel, ein Waschtisch, eine Betätigungsplatte, eine Sanitärarmatur, ein Montagegestell mit integriertem Sanitärartikelaktuator, ein Dusch-WC und/oder ein Dusch-WC-Aufsatz verstanden. Der Sanitärartikel kann aber auch ein Sensor sein, der in einem Sanitärraum angeordnet ist. Somit können beispielsweise Umgebungsdaten, wie Lufttemperatur, Wassertemperatur, Luftfeuchtigkeit, Benutzerfrequenzen, etc. durch den Sensor erfasst und im Sanitärsystem entsprechend ausgewertet werden.

Vorzugsweise sind in einem Sanitärsystem eine Vielzahl von Sanitärartikeln angeordnet.

Die Sanitärartikelsteuerung kann je nach Funktion aktiv und/oder passiv mit dem Sanitärartikel zusammenarbeiten. Wenn der Sanitärartikel einen Aktuator, wie ein Ventil, umfasst, so kann die Sanitärartikelsteuerung den Aktuator aktiv ansteuern. Wenn der Sanitärartikel einen Sensor umfasst, so kann die Sanitärartikelsteuerung Sensordaten empfangen.

Die Daten sind vorzugsweise Steuerungsdaten und/oder Zustandsdaten und/oder Messdaten und/oder Parameterdaten. Vorzugsweise ist das Gateway, das Leitsystem und/oder der mobile Computer derart konfiguriert, dass die Daten weiterverarbeitet werden können. Beispielsweise können die Daten die Basis für eine kontrollierte Hygienespülung und/oder für zustandsorientierte Instandhaltungsarbeiten bilden.

Unter der Ausdrucksweise "mobiler Computer" wird ein mobiler Personal Computer, ein Notebook, ein Mobiltelefon, ein Tablet, ein Smartphone, eine Smartwatch oder ein ähnliches Gerät verstanden. Der Computer ist dabei derart konfiguriert, dass der Computer die beschriebenen Funktionen ausführen kann.

Unter der Ausdrucksweise "Prozessor" wird ein Verarbeitungselement verstanden, welches derart konfiguriert ist, dass die beschriebenen Schritte ausführbar sind.

Unter der Ausdrucksweise "Kommunikationsschnittstelle" wird eine Schnittstelle verstanden, über welche Daten zwischen den einzelnen Elementen ausgetauscht werden. Insbesondere zwischen dem Prozessor des Computers und dem Prozessor der Sanitärartikelsteuerung. Die Kommunikationsschnittstellen werden mit entsprechenden Protokollen betrieben.

Weitere Ausführungsformen sind in den abhängigen Ansprüchen angegeben

### KURZE BESCHREIBUNG DER ZEICHNUNGEN

Bevorzugte Ausführungsformen der Erfindung werden im Folgenden anhand der Zeichnungen beschrieben.

In den Zeichnungen zeigen:

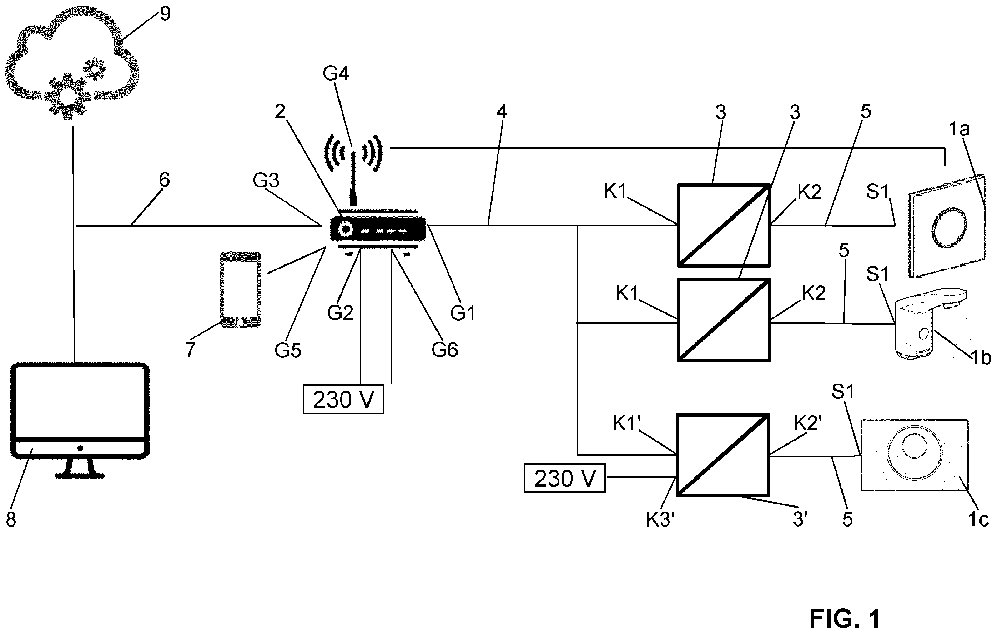

- Fig. 1: eine Schemaansicht des Sanitärsystems nach einer Ausführungsform der vorliegenden Erfindung.

### BESCHREIBUNG BEVORZUGTER AUSFÜHRUNGSFORMEN

In der Figur 1 wird eine Schemaansicht eines Sanitärsystems gezeigt.

Das Sanitärsystem umfasst mindestens einen Sanitärartikel 1a, 1b, 1c, ein Gateway 2 und mindestens einen Konverter 3. In der gezeigten Ausführungsform ist pro Sanitärartikel 1a, 1b, 1c je ein Konverter 3, 3' angeordnet.

Jeder Sanitärartikel 1a, 1b, 1c umfasst jeweils eine Sanitärartikelsteuerung, die zur Interaktion mit dem Sanitärartikel 1a, 1b, 1c konfiguriert ist. Jede Sanitärartikelsteuerung weist eine sanitärartikelseitige Schnittstelle S1 auf. Die Sanitärartikelsteuerung weist vorzugsweise mindestens einen Prozessor auf, welcher mit der sanitärartikelseitigen Schnittstelle S1 wirkverbunden ist.

Die Sanitärartikel 1a und 1c sind als Betätigungsplatten zur Auslösung einer Spülung an einer Toilette oder einem Urinal ausgebildet. Der Sanitärartikel 1b ist als Auslaufarmatur ausgebildet. Der Sanitärartikel kann auch anderweitig ausgebildet sein.

Das Gateway 2 weist eine gatewayseitige Schnittstelle G1 auf.

Jeweils ein Konverter 3 ist zwischen der jeweiligen Sanitärartikelsteuerung und dem Gateway 2 angeordnet. Der mindestens eine Konverter 3 ist mit einer ersten konverterseitigen Schnittstelle K1 und einer zweiten konverterseitigen Schnittstelle K2 ausgebildet. Der mindestens eine Konverter 3 steht über ein erstes Kabel 4 mit dem Gateway in Verbindung. Das erste Kabel 4 verbindet dabei die gatewayseitige Schnittstelle G1 mit der ersten konverterseitigen Schnittstelle K1. Jeder der Konverter 3 steht mit einem zweiten Kabel 5 mit dem jeweiligen Sanitärartikel 1a, 1b, 1c in Verbindung. Das zweite Kabel 5 verbindet die zweite konverterseitige Schnittstelle K2 mit der sanitärartikelseitigen Schnittstelle S1.

Beide Kabel 4, 5 umfassen jeweils eine Datenbusleiteranordnung zur Übertragung von Daten und eine Speisungsleiteranordnung zur Übertragung von elektrischer Energie. Somit können die Sanitärartikel bzw. die Sanitärartikelsteuerung mit elektrischer Energie versorgt werden. Gleichzeitig kann zwischen dem Gateway und dem Sanitärartikel bzw. der Sanitärartikelsteuerung eine Datenleitung bereitgestellt werden. Über die Datenleitung können Daten wie beispielsweise Steuerungsdaten, insbesondere Steuerungsbefehle, und/oder Zustandsdaten und/oder Messdaten und/oder Parameterdaten zwischen der Sanitärartikelsteuerung und dem Gateway ausgetauscht werden.

Die Datenbusleiteranordnung und die Speisungsleitungsanordnung sind als entsprechende Adernpakete voneinander elektrisch und vorzugsweise auch elektromagnetisch getrennt im jeweiligen Kabel 4, 5 angeordnet.

Der Konverter 3 umfasst einen Datenkonverter, der zur Datenumwandlung konfiguriert ist, und einen Spannungskonverter, der zur Spannungsumwandlung konfiguriert ist. Bei der Datenumwandlung können Daten von einem Format in ein anderes Format gebracht werden. Bei der Spannungsumwandlung kann die elektrische Spannung von einem ersten Wert auf einen zweiten Wert umgewandelt werden.

Vorzugsweise stellt der Gateway 2 an der ersten gatewayseitigen Schnittstelle G1 eine Spannung im Bereich von 18 bis 48 Volt bereit. Der Spannungskonverter wandelt die Spannung von 18 bis 48 Volt in eine tiefere Spannung von 2.5 Volt bis 15 Volt um. Der konverterseitigen Schnittstelle K2 ist demnach eine umgewandelte Spannung, hier eine herabgesetzte Spannung bereitstellbar.

Die Datenbusleiteranordnung zwischen dem Gateway 2 und dem Konverter 3 ist ein RS-485-Bus. Der RS-485-Bus wird mit einem RS-485-Protkoll betrieben.

Die Datenbusleiteranordnung zwischen dem Konverter 3 und der Sanitärartikelsteuerung 1a, 1b, 1c ist ein I²C-Bus, der mit einem I²C-Protokoll betrieben wird. Der Datenkonverter ist zur Umwandlung der Daten zwischen dem RS-485-Bus-Prokoll und dem I²C-Bus-Protokoll konfiguriert.

Das Gateway 2 weist weiter eine Energieversorgungsschnittstelle G2 auf, über welche das Gateway 2 mit Netzspannung von 230 Volt versorgt wird. Für die Bereitstellung der oben genannten Spannung an der gatewayseitigen Schnittstelle G1 weist das Gateway einen Spannungskonverter auf, welcher die Netzspannung von 230 Volt in eine tiefere Spannung umwandelt. Diese tiefere Spannung wird dann an der ersten gatewayseitigen Schnittstelle G1 dem ersten Kabel 4 bereitgestellt.

Das Gateway 2 weist weiter mindestens eine Datenschnittstelle G3 auf. Über die Datenschnittstelle G3 ist das Gateway 2 an ein gemäss einem IP-Protokoll betriebenen Netzwerk 6 anschliessbar. Das Gateway 2 weist zudem einen Datenkonverter auf, der zur Umwandlung der Daten zwischen dem IP-Protokoll und dem Protokoll der Datenbusleiteranordnung des ersten Kabels 4 konfiguriert ist. Über das Gateway 2 sowie den Konverter 3 steht die Sanitärartikelsteuerung mit dem IP-Netzwerk in Verbindung. Teil des IP-Netzwerkes ist beispielsweise ein Computer 8 oder eine Cloud 9. Der Computer 8 bzw. die Cloud 9 sind dabei derart konfiguriert, dass die hierin genannten Daten verarbeitbar und/oder speicherbar sind. Hierfür umfasst der Computer 8 bzw. die Cloud 9 entsprechende Elemente, wie Prozessoren und Speicher.

In der gezeigten Ausführungsform weist der Konverter 3' nebst der beiden konverterseitigen Schnittstellen K1' und K2' zusätzlich eine Energieversorgungsschnittstelle K3' auf. Die erste konverterseitige Schnittstelle K1' steht mit dem ersten Kabel 4 in Verbindung. Die zweite konverterseitige Schnittstelle K2' steht mit dem zweiten Kabel 5 in Verbindung, welches wiederum mit der sanitärartikelseitigen Schnittstelle S1 des Sanitärartikels 1c in Verbindung steht. Über die Energieversorgungsschnittstelle K3' wird der Konverter 3 mit Netzspannung von 230 Volt versorgt, wobei der Spannungskonverter die Spannung von 230 Volt in eine tiefere Spannung im Bereich von 4 Volt bis 24 Volt umwandelt. Dies hat den Vorteil, dass dem Sanitärartikel 1c im Vergleich zu den Sanitärartikel 1a und 1b grössere Leistungen zur Verfügung gestellt werden können. Der Konverter 3' weist, wie die anderen oben beschriebenen Konverter, ebenfalls den besagten Datenkonverter auf.

Der Konverter 3, 3' ist zwischen der ersten konverterseitigen Schnittstelle K1 und der zweiten konverterseitigen Schnittstelle vorzugsweise galvanisch getrennt ausgebildet.

Vorzugsweise umfassen die gatewayseitige Schnittstelle G1 und/oder die konverterseitige Schnittstelle K1 und/oder die konverterseitige Schnittstelle K2 und/oder die sanitärartikelseitige Schnittstelle S1 Steckverbinderelemente, wie Stecker und Buchsen, oder Anschlussklemmen umfassen. Vorzugsweise ist ein Steckverbinderelement derart ausgebildet, dass dieses sowohl einen Steckverbinderteil für die Datenbusleiteranordnung als auch einen Steckverbinderteil für die Speisungsleiteranordnung aufweist.

In der gezeigten Ausführungsform sind die drei Konverter 3, 3' mit dem ersten Kabel 4 mit dem Gateway 2 in Verbindung. Die Konverter 3, 3' können seriell oder sternförmig zueinander mit dem Gateway 2 verbunden werden.

In der gezeigten Ausführungsform weist das Gateway 2 weiterhin mindestens eine drahtlose Datenschnittstelle G4 auf. Weiter weist auch die Sanitärartikelsteuerung eine drahtlose Datenschnittstelle S2 auf, wobei die Datenschnittstellen G4, S2 derart ausgebildet, dass Daten über die Datenschnittstellen G4, S2 zwischen dem Gateway 2 und der Sanitärartikelsteuerung austauschbar sind.

In der gezeigten Ausführungsform weist das Sanitärsystem weiterhin mindestens einen Computer 7, 8 auf. Der Computer 7 ist beispielsweise ein mobiler Computer, wie ein Smartphone oder ein Tablet oder ein Notebook. Die Computer 7, 8 umfassen mindestens einen Prozessor, mindestens eine mit dem Prozessor wirkverbundene computerseitige Kommunikationsschnittstelle CK und einen mit dem Prozessor wirkverbundenen Bildschirm. Der Computer ist mit der computerseitigen Kommunikationsschnittstelle mit einer entsprechenden Datenschnittstelle G3, G5 mit dem Gateway 2 verbindbar, derart, dass eine Datenverbindung zwischen Computer 7, 8 und dem Gateway 2 bereitstellbar ist. Der Computer 7, 8 ist über den Gateway 2 und den Konverter 3, 3' mit der Sanitärartikelsteuerung des Sanitärartikels 1a, 1b, 1c verbindbar. Die Verbindung ist dabei derart ausgebildet, dass die oben genannten Daten zwischen dem Computer 7, 8 und der Sanitärartikelsteuerung ausgetauscht werden.

Weiter weist das Gateway 2 eine drahtgebundene oder drahtlose Datenschnittstelle G6 aufweist, welche mit einer entsprechenden Datenschnittstelle einer weiteren Sanitärartikelsteuerung verbindbar ist, derart, dass Daten über die Datenschnittstellen G5 zwischen dem Gateway 2 und der Sanitärartikelsteuerung austauschbar sind. Die weitere Sanitärartikelsteuerung ist beispielsweise eine Licht-Steuerung eines Spiegelschranks.

Ferner kann die drahtlose Datenschnittstelle G4 und/oder G6 WI-FI unterstützen, wobei das Gateway 2 über diese Datenschnittstellen G4, G6 mit der Cloud 9 oder dem Computer 8 verbunden werden können.

### BEZUGSZEICHENLISTE

- 1a, 1b, 1c: Sanitärartikel
- 2: Gateway
- 3: Konverter
- 4: erstes Kabel
- 5: zweites Kabel
- 6: IP-Netzwerk
- 7: Computer
- 8: Computer
- 9: Cloud
- S1: sanitärartikelseitige Schnittstelle
- S2: drahtlose Datenschnittstelle
- CK: computerseitige Datenschnittstelle
- K1: erste konverterseitige Schnittstelle
- K2: zweite konverterseitige Schnittstelle
- K3': Energieversorgungsschnittstelle
- G1: gatewayseitige Schnittstelle
- G2: Energieversorgungsschnittstelle
- G3: Datenschnittstelle
- G4: drahtlose Datenschnittstelle
- G5: Datenschnittstelle
- G6: Datenschnittstelle

## Patentansprüche

1. Sanitärsystem umfassend
mindestens einen Sanitärartikel (1a, 1b, 1c) mit jeweils einer Sanitärartikelsteuerung, die zur Interaktion mit dem Sanitärartikel (1a, 1b, 1c) konfiguriert ist, wobei die Sanitärartikelsteuerung eine sanitärartikelseitige Schnittstelle (S1) aufweist,
ein Gateway (2), wobei das Gateway eine gatewayseitige Schnittstelle (G1) aufweist, mindestens einen zwischen dem Gateway (2) und der Sanitärartikelsteuerung angeordneten Konverter (3, 3') mit einer ersten konverterseitigen Schnittstelle (K1, K1') und einer zweiten konverterseitigen Schnittstelle (K2, K2'),
ein erstes Kabel (4), welches eine Verbindung zwischen der gatewayseitigen Schnittstelle (G1) und der ersten konverterseitigen Schnittstelle (K1, K1') bereitstellt, und
ein zweites Kabel (5), welches eine Verbindung zwischen der zweiten konverterseitigen Schnittstelle (K2, 2') und der
sanitärartikelseitigen Schnittstelle (S1) bereitstellt,
wobei die Kabel (4, 5) jeweils eine Datenbusleiteranordnung zur Übertragung von Daten und eine Speisungsleiteranordnung zur Übertragung von elektrischer Energie aufweisen,
und wobei der Konverter (3, 3') einen Datenkonverter, der zur Datenumwandlung konfiguriert ist, und einen Spannungskonverter, der zur Spannungsumwandlung konfiguriert ist, umfasst,
**dadurch gekennzeichnet, dass**
die Datenbusleiteranordnung zwischen dem Gateway (2) und dem Konverter (3, 3') ein RS-485-Bus ist, der mit dem RS-485-Protokoll betrieben wird, und dass die Datenbusleiteranordnung zwischen dem Konverter (3, 3') und der Sanitärartikelsteuerung (1a, 1b, 1c) ein I²C-Bus ist, der mit einem I²C-Protokoll betrieben wird, wobei der Datenkonverter zur Umwandlung der Daten zwischen dem RS-485-Bus-Protokoll und dem I²C-Bus-Protokoll konfiguriert bzw. programmiert ist.

2. Sanitärsystem nach Anspruch 1, **dadurch gekennzeichnet, dass** das Gateway (2) an der ersten gatewayseitigen Schnittstelle (G1) eine Spannung im Bereich von 18 bis 48 Volt bereitstellt und dass der Spannungskonverter des Konverters (3 3') die Spannung von 18 bis 48 Volt in eine tiefere Spannung von 2.5 Volt bis 15 Volt umwandelt, so dass an der zweiten konverterseitigen Schnittstelle (K2, K2') eine umgewandelte Spannung bereitstellbar ist.

3. Sanitärsystem nach einem der vorhergehenden Ansprüche, **dadurch gekennzeichnet, dass** das Gateway (2) weiter eine Energieversorgungsschnittstelle (G2) aufweist, über welche das Gateway (2) mit Netzspannung von 230 Volt versorgt wird, wobei das Gateway (2) einen Spannungskonverter aufweist, welcher die Netzspannung von 230 Volt in eine tiefere Spannung umwandelt, welche tiefere Spannung an der ersten gatewayseitigen Schnittstelle (G1) dem ersten Kabel (4) bereitgestellt wird.

4. Sanitärsystem nach einem der vorhergehenden Ansprüche, **dadurch gekennzeichnet, dass** das Gateway (2) mindestens eine Datenschnittstelle (G3) aufweist, über welche das Gateway (2) an ein gemäss einem IP-Protokoll betriebenen Netzwerk (6) anschliessbar ist, und dass das Gateway (2) einen Datenkonverter aufweist, der zur Umwandlung der Daten zwischen dem IP-Protokoll und dem Protokoll der Datenbusleiteranordnung des ersten Kabels (4) konfiguriert ist.

5. Sanitärsystem nach einem der vorhergehenden Ansprüche, **dadurch gekennzeichnet, dass** der Konverter (3, 3') eine Energieversorgungsschnittstelle (K3) aufweist, über welche der Konverter (3, 3') mit Netzspannung von 230 Volt versorgt wird, wobei der Spannungskonverter die Spannung von 230 Volt in eine tiefere Spannung im Bereich von 4 Volt bis 24 Volt umwandelt.

6. Sanitärsystem nach einem der vorhergehenden Ansprüche, **dadurch gekennzeichnet, dass** das System einen weiteren Konverter (3') umfasst,
wobei der weitere Konverter eine erste konverterseitige Schnittstelle (K1') und eine zweite konverterseitige Schnittstelle (K2') aufweist, und eine Energieversorgungsschnittstelle (K3') aufweist,
wobei die erste konverseitige Schnittstelle (K1') mit dem ersten Kabel (4) in Verbindung steht, und
wobei über die Energieversorgungsschnittstelle (K3') der Konverter (3) mit Netzspannung von 230 Volt versorgt wird, wobei der Spannungskonverter die Spannung von 230 Volt in eine tiefere Spannung im Bereich von 4 Volt bis 24 Volt umwandelt.

7. Sanitärsystem nach einem der vorhergehenden Ansprüche, **dadurch gekennzeichnet, dass** der Konverter (3, 3') zwischen der ersten konverterseitigen Schnittstelle (K1) und der zweiten konverterseitigen Schnittstelle (K2) galvanisch getrennt ausgebildet ist.

8. Sanitärsystem nach einem der vorhergehenden Ansprüche, **dadurch gekennzeichnet, dass** die gatewayseitige Schnittstelle (G1) und/oder die erste konverterseitige Schnittstelle (K1) und/oder die zweite konverterseitige Schnittstelle (K2) und/oder die sanitärartikelseitige Schnittstelle (S1) Steckverbinderelemente, wie Stecker und Buchsen, oder Anschlussklemmen umfassen.

9. Sanitärsystem nach einem der vorhergehenden Ansprüche, **dadurch gekennzeichnet, dass** mehrere Konverter (3, 3') mit dem ersten Kabel sternförmig mit dem Gateway in Verbindung stehen oder dass mehrere Konverter (3, 3') mit dem ersten Kabel in Serie mit dem Gateway in Verbindung stehen.

10. Sanitärsystem nach einem der vorhergehenden Ansprüche, **dadurch gekennzeichnet, dass** das Gateway (2) mindestens eine drahtlose Datenschnittstelle (G4) aufweist, und dass die Sanitärartikelsteuerung eine drahtlose Datenschnittstelle (S2) aufweist, wobei die Datenschnittstellen (G4, S2) derart ausgebildet sind, dass Daten über die Datenschnittstellen (G4, S2) zwischen dem Gateway (2) und der Sanitärartikelsteuerung austauschbar sind.

11. Sanitärsystem nach einem der vorhergehenden Ansprüche, **dadurch gekennzeichnet, dass** das Sanitärsystem weiterhin mindestens einen Computer (7, 8) mit mindestens einen Prozessor, mindestens eine mit dem Prozessor wirkverbundene computerseitige Kommunikationsschnittstelle (CK) und einen mit dem Prozessor wirkverbundenen Bildschirm umfasst, wobei der Computer mit der computerseitigen Kommunikationsschnittstelle mit einer entsprechenden Datenschnittstelle (G3, G5) mit dem Gateway (2) verbindbar ist, derart, dass eine Datenverbindung zwischen Computer (7, 8) und dem Gateway (2) bereitstellbar ist.

12. Sanitärsystem nach einem der vorhergehenden Ansprüche, **dadurch gekennzeichnet, dass** das Gateway (2) eine drahtgebundene oder drahtlose Datenschnittstelle (G6) aufweist, welche mit einer entsprechenden Datenschnittstelle einer weiteren Sanitärartikelsteuerung verbindbar ist, derart, dass Daten über die Datenschnittstellen (G6) zwischen dem Gateway (2) und der Sanitärartikelsteuerung austauschbar sind.

## Claims

1. Sanitary system comprising
at least one sanitary article (1a, 1b, 1c), each with a sanitary article controller configured to interact with the sanitary article (1a, 1b, 1c), wherein the sanitary article controller comprises a sanitary article-side interface (S1),
a gateway (2), wherein the gateway has a gateway-side interface (G1),
at least one converter (3, 3') arranged between the gateway (2) and the sanitary article controller, with a first converter-side interface (K1, K1') and a second converter-side interface (K2, K2'),
a first cable (4) which provides a connection between the gateway-side interface (G1) and the first converter-side interface (K1, K1'), and
a second cable (5) which provides a connection between the second converter-side interface (K2, 2') and the sanitary article-side interface (S1),
wherein the cables (4, 5) each comprise a data bus conductor arrangement for transmitting data and a power supply conductor arrangement for transmitting electrical energy,
and wherein the converter (3, 3') comprises a data converter configured for data conversion and a voltage converter configured for voltage conversion,
**characterized in that**
the data bus conductor arrangement between the gateway (2) and the converter (3, 3') is an RS-485 bus operated with the RS-485 protocol, and **in that** the data bus conductor arrangement
between the converter (3, 3') and the sanitary article controller (1a, 1b, 1c) is a I²C bus
operated with a I²C protocol, wherein the data converter is configured or programmed to convert the data between the RS-485 bus protocol and the I²C bus protocol.

2. Sanitary system according to claim 1, **characterized in that** the gateway (2) provides a voltage in the range of 18 to 48 volts at the first gateway-side interface (G1) and that the voltage converter of the converter (3, 3') converts the voltage of 18 to 48 volts into a lower voltage of 2.5 volts to 15 volts, so that a converted voltage can be provided at the second converter-side interface (K2, K2').

3. Sanitary system according to one of the preceding claims, **characterized in that** the gateway (2) further comprises an energy supply interface (G2) via which the gateway (2) is supplied with a line voltage of 230 volts, wherein the gateway (2) comprises a voltage converter which converts the line voltage of 230 volts into a lower voltage, which lower voltage is supplied to the first cable (4) at the first gateway-side interface (G1).

4. Sanitary system according to one of the preceding claims,
**characterized in that** the gateway (2) comprises at least one data interface (G3) via which the gateway (2) can be connected to a network (6) operated according to an IP protocol, and **in that** the gateway (2) comprises a data converter which is configured to convert the data between the IP protocol and the protocol of the data bus conductor arrangement of the first cable (4).

5. Sanitary system according to one of the preceding claims, **characterized in that** the converter (3, 3') comprises an energy supply interface (K3) via which the converter (3, 3') is supplied with a line voltage of 230 volts, wherein the voltage converter converts the voltage of 230 volts into a lower voltage in the range of 4 volts to 24 volts.

6. Sanitary system according to one of the preceding claims, **characterized in that** the system comprises a further converter (3'), wherein the further converter comprises a first converter-side interface (K1') and a second converter-side interface (K2'), and comprises an energy supply interface (K3'), wherein the first converter-side interface (K1') is connected to the first cable (4), and wherein the converter (3) is supplied with a line voltage of 230 volts via the power supply interface (K3'), wherein the voltage converter converts the voltage of 230 volts into a lower voltage in the range of 4 volts to 24 volts.

7. Sanitary system according to one of the preceding claims, **characterized in that** the converter (3, 3') is configured in a galvanically isolated manner between the first converter-side interface (K1) and the second converter-side interface (K2).

8. Sanitary system according to one of the preceding claims, **characterized in that** the gateway-side interface (G1) and/or the first converter-side interface (K1) and/or the second converter-side interface (K2) and/or the sanitary article-side interface (S1) comprise plug connector elements, such as plugs and sockets, or connection terminals.

9. Sanitary system according to one of the preceding claims, **characterized in that** several converters (3, 3') are connected to the gateway in a star configuration via the first cable, or that several converters (3, 3') are connected to the gateway in series via the first cable.

10. Sanitary system according to one of the preceding claims, **characterized in that** the gateway (2) comprises at least one wireless data interface (G4), and **in that** the sanitary article controller comprises a wireless data interface (S2), wherein the data interfaces (G4, S2) are configured such that data can be exchanged via the data interfaces (G4, S2) between the gateway (2) and the sanitary article controller.

11. Sanitary system according to one of the preceding claims, **characterized in that** the sanitary system further comprises at least one computer (7, 8) with at least one processor, at least one computer-side communication interface (CK) operatively connected to the processor, and a screen operatively connected to the processor, wherein the computer with the computer-side communication interface can be connected to the gateway (2) via a corresponding data interface (G3, G5) in such a way that a data connection between the computer (7, 8) and the gateway (2) can be established.

12. Sanitary system according to one of the preceding claims, **characterized in that** the gateway (2) comprises a wired or wireless data interface (G6) which can be connected to a corresponding data interface of a further sanitary article controller, such that data can be exchanged via the data interfaces (G6) between the gateway (2) and the sanitary article controller.

## Revendications

1. Système sanitaire comprenant
au moins un article sanitaire (1a, 1b, 1c) avec respectivement une commande d'article sanitaire qui est configurée pour interagir avec l'article sanitaire (1a, 1b, 1c), la commande d'article sanitaire présentant une interface côté article sanitaire (S1),
une passerelle (2), la passerelle comportant une interface côté passerelle (G1),
au moins un convertisseur (3, 3') disposé entre la passerelle (2) et la commande d'article sanitaire, avec une première interface côté convertisseur (K1, K1') et une deuxième interface côté convertisseur (K2, K2'),
un premier câble (4) qui assure une connexion entre l'interface côté passerelle (G1) et la première interface côté convertisseur (K1, K1'), et
un deuxième câble (5) qui établit une connexion entre la deuxième interface côté convertisseur (K2, 2') et l'interface côté article sanitaire (S1),
les câbles (4, 5) comportant chacun un agencement de conducteurs de bus de données pour la transmission de données et un agencement de conducteurs d'alimentation pour la transmission d'énergie électrique,
et le convertisseur (3, 3') comprenant un convertisseur de données configuré pour la conversion de données et un convertisseur de tension configuré pour la conversion de tension,
**caractérisé en ce que**
l'agencement de conducteurs de bus de données entre la passerelle (2) et le convertisseur (3, 3') est un bus RS-485 fonctionnant avec un protocole RS-485, et **en ce que** l'agencement de conducteurs de bus de données entre le convertisseur (3, 3') et la commande d'article sanitaire (1a, 1b, 1c) est un bus I²C fonctionnant avec un protocole I²C, le convertisseur de données étant configuré ou programmé pour convertir les données entre le protocole de bus RS-485 et le protocole de bus I²C.

2. Système sanitaire selon la revendication 1, **caractérisé en ce que** la passerelle (2) fournit une tension comprise entre 18 et 48 volts au niveau de la première interface côté passerelle (G1) et **en ce que** le convertisseur de tension du convertisseur (3 3') convertit la tension de 18 à 48 volts en une tension plus faible de 2,5 volts à 15 volts, de sorte qu'une tension convertie puisse être fournie au niveau de la deuxième interface côté convertisseur (K2, K2').

3. Système sanitaire selon l'une quelconque des revendications précédentes, **caractérisé en ce que** la passerelle (2) comprend en outre une interface d'alimentation électrique (G2) par l'intermédiaire de laquelle la passerelle (2) est alimentée en tension du secteur de 230 volts, la passerelle (2) comportant un convertisseur de tension qui convertit la tension du secteur de 230 volts en une tension plus faible, laquelle tension plus faible étant fournie au premier câble (4) au niveau de la première interface côté passerelle (G1).

4. Système sanitaire selon l'une quelconque des revendications précédentes, **caractérisé en ce que** la passerelle (2) comporte au moins une interface de données (G3) par l'intermédiaire de laquelle la passerelle (2) peut être connectée à un réseau (6) fonctionnant selon un protocole IP, et **en ce que** la passerelle (2) comporte un convertisseur de données qui est configuré pour convertir les données entre le protocole IP et le protocole de l'agencement de conducteurs de bus de données du premier câble (4).

5. Système sanitaire selon l'une quelconque des revendications précédentes, **caractérisé en ce que** le convertisseur (3, 3') comporte une interface d'alimentation électrique (K3) par l'intermédiaire de laquelle le convertisseur (3, 3') est alimenté en tension du secteur de 230 volts, le convertisseur de tension convertissant la tension de 230 volts en une tension plus faible comprise entre 4 volts et 24 volts.

6. Système sanitaire selon l'une quelconque des revendications précédentes, **caractérisé en ce que** le système comprend un convertisseur supplémentaire (3'),
le convertisseur supplémentaire comportant une première interface côté convertisseur (K1') et une deuxième interface côté convertisseur (K2'), et une interface d'alimentation électrique (K3'),
la première interface côté convertisseur (K1') étant reliée au premier câble (4), et
le convertisseur (3) étant alimenté en tension secteur de 230 volts via l'interface d'alimentation électrique (K3'), le convertisseur de tension convertissant la tension de 230 volts en une tension plus faible comprise entre 4 volts et 24 volts.

7. Système sanitaire selon l'une quelconque des revendications précédentes, **caractérisé en ce que** le convertisseur (3, 3') est réalisé de manière isolée galvaniquement entre la première interface côté convertisseur (K1) et la deuxième interface côté convertisseur (K2).

8. Système sanitaire selon l'une quelconque des revendications précédentes, **caractérisé en ce que** l'interface côté passerelle (G1) et/ou la première interface côté convertisseur (K1) et/ou la deuxième interface côté convertisseur (K2) et/ou l'interface côté article sanitaire (S1) comprennent des éléments de connecteurs enfichables, tels que des fiches et des prises, ou des bornes de raccordement.

9. Système sanitaire selon l'une quelconque des revendications précédentes, **caractérisé en ce que** plusieurs convertisseurs (3, 3') sont reliés en étoile à la passerelle par le premier câble ou **en ce que** plusieurs convertisseurs (3, 3') sont reliés en série à la passerelle par le premier câble.

10. Système sanitaire selon l'une quelconque des revendications précédentes, **caractérisé en ce que** la passerelle (2) comporte au moins une interface de données sans fil (G4) et **en ce que** la commande d'article sanitaire comporte une interface de données sans fil (S2), les interfaces de données (G4, S2) étant conçues de telle sorte que les données puissent être échangées entre la passerelle (2) et la commande d'article sanitaire via les interfaces de données (G4, S2).

11. Système sanitaire selon l'une quelconque des revendications précédentes, **caractérisé en ce que** le système sanitaire comprend en outre au moins un ordinateur (7, 8) avec au moins un processeur, au moins une interface de communication côté ordinateur (CK) reliée de manière fonctionnelle au processeur et un écran relié de manière fonctionnelle au processeur, l'ordinateur avec l'interface de communication côté ordinateur pouvant être relié à une interface de données correspondante (G3, G5) avec la passerelle (2), de telle sorte qu'une connexion de données entre l'ordinateur (7, 8) et la passerelle (2) puisse être établie.

12. Système sanitaire selon l'une quelconque des revendications précédentes, **caractérisé en ce que** la passerelle (2) comporte une interface de données filaire ou sans fil (G6) qui peut être reliée à une interface de données correspondante d'une commande d'article sanitaire supplémentaire, de telle sorte que des données puissent être échangées entre la passerelle (2) et la commande d'article sanitaire via les interfaces de données (G6).
